# EUROPEAN PATENT APPLICATION

(11) **EP 3 618 082 A1**
(43) Date of publication of application: **04.03.2020**
(21) Application number: 18790462.8
(22) Date of filing: 23.04.2018
(51) Int. Cl.: H01B 5/14, C09K 9/00, H01B 1/02, H01B 13/00, G02F 1/15

(54) **CONDUCTIVE LAMINATE AND ELECTROCHROMIC DEVICE COMPRISING SAME**

(30) Priority: 24.04.2017 KR 20170052043; 19.04.2018 KR 20180045421
(71) Applicant: LG Chem, Ltd., Seoul 07336 (KR)
(72) Inventor: KIM, Yong Chan, Daejeon 34122 (KR); JANG, Song Ho, Daejeon 34122 (KR); KIM, Ki Hwan, Daejeon 34122 (KR); JO, Pil Sung, Daejeon 34122 (KR)
(74) Representative: Goddar, Heinz J.
(86) International application number: PCT/KR2018/004674
(87) International publication number: WO 2018/199572

(57) **Abstract**

The present application relates to a conductive laminate and an electrochromic device comprising the same. The conductive laminate comprises a metal oxynitride, a metal oxide, and a conductive layer. The electroconductive laminate and the electrochromic device of the present application do not only have excellent durability and color-switching speed, but also can control optical properties stepwise.

## Description

### Technical Field

### Cross-Reference to Related Applications

This application claims the benefit of priority based on Korean Patent Application No. 10-2017-0052043 filed on April 24, 2017 and Korean Patent Application No. 10-2018-0045421 filed on April 19, 2018, the disclosures of which are incorporated herein by reference in their entirety.

### Technical Field

The present application relates to a conductive laminate and an electrochromic device comprising the same.

### Background Art

Electrochromism refers to a phenomenon in which an optical property of an electrochromic material is changed by an electrochemical oxidation or reduction reaction, where the device using the phenomenon is referred to as an electrochromic device. The electrochromic device generally comprises a working electrode, a counter electrode and an electrolyte, where optical properties of each electrode can be reversibly changed by an electrochemical reaction. For example, the working electrode or the counter electrode may comprise a transparent conductive material and an electrochromic material in the form of films, respectively, and in the case where a potential is applied to the device, as the electrolyte ions are inserted into or removed from the electrochromic material-containing film and the electrons simultaneously move through an external circuit, the optical property changes of the electrochromic material appear.

Such an electrochromic device is capable of producing devices having a large area with a small cost and has low power consumption, so that it is attracting attention as smart windows or smart mirrors, and other next-generation architectural window materials. However, since it takes a considerable time to insert and/or remove the electrolyte ions for the optical property changes of the entire area of an electrochromic layer, there is a disadvantage that the color-switching speed is slow. Such a disadvantage is more remarkable when the transparent conductive electrode has high sheet resistance or when the electrochromic device is required to have a large area.

On the other hand, recently, there is an increasing demand for electrochromic devices and application fields have also been diversified, so that development of a device capable of finely adjusting optical characteristics while having excellent durability is required.

### Disclosure

### Technical Problem

It is one object of the present application to provide a conductive laminate capable of electrochromism.

It is another object of the present application to provide a conductive laminate having an improved color-switching speed or electrochromic speed.

It is another object of the present application to provide a conductive laminate having excellent durability and an improved usable level.

It is another object of the present application to provide a conductive laminate capable of finely adjusting transmittance.

It is still another object of the present application to provide an electrochromic device comprising the conductive laminate.

The above and other objects of the present application can be all solved by the present application which is described in detail below.

### Technical Solution

In one example of the present application, the present application relates to a conductive laminate. The conductive laminate has variable transmittance characteristics by electrochromism. Specifically, since the conductive laminate may comprise an electrochromic material and change optical properties as a result of electrochromism according to an electrochemical reaction, it can be used as one constitution of an electrochromic device. The electrochromism can occur in one or more layers included in the conductive laminate.

The conductive laminate comprises a metal oxynitride layer, a metal oxide layer and a conductive layer. The form in which the conductive laminate comprises each layer structure is not particularly limited. For example, the conductive laminate may comprise a metal oxynitride layer, a metal oxide layer and a conductive layer sequentially, or may sequentially comprise a metal oxide layer, a metal oxynitride layer and a conductive layer. At this time, the conductive laminate may also be configured while separate layers are present between the respective layers, or one side of each layer may be in direct contact with each other.

In one example, the metal oxide layer, the metal oxynitride layer and the conductive layer may have light transmission characteristics. In the present application, the light transmission characteristics may mean a case of being transparent enough to be capable of clearly viewing a change in optical characteristics such as a color change occurring in an electrochromic device, and for example, may mean a case where the corresponding layer has light transmittance of at least 60% or more in a state without any external factor such as potential application (and/or a bleached state). More specifically, the lower limit of the light transmittance of the metal oxide layer, the metal oxynitride layer and the conductive layer may be 60% or more, 70% or more, or 75% or more, and the upper limit of the light transmittance may be 95% or less, 90% or less, or 85% or less. When the light transmission characteristics in the above range is satisfied, a user can fully observe a change in optical characteristics of the electrochromic device by electrochromism according to potential application, that is, reversible coloring and bleaching. That is, in the case of having light transmission characteristics in an uncolored state, it is suitable for the electrochromic device. Unless otherwise specified, the "light" in the present application may mean visible light in a wavelength range of 380 nm to 780 nm, more specifically visible light having a wavelength of 550 nm. The transmittance can be measured using a known haze meter (HM).

The metal oxide layer may comprise an electrochromic material, that is, a metal oxide capable of electrochromism.

In one example, the metal oxide layer may comprise a reducing (inorganic) electrochromic material that coloration occurs upon a reduction reaction. The kind of the usable reducing (inorganic) electrochromic material is not particularly limited, but an oxide of Ti, Nb, Mo, Ta or W may be used. For example, WO₃, MoO₃, Nb₂O₅, Ta₂O₅ or TiO₂, and the like may be used.

In another example, the metal oxide layer may comprise an oxidizing electrochromic material that is colored when oxidized. The kind of the usable oxidizing electrochromic material is not particularly limited, but an oxide of Cr, Mn, Fe, Co, Ni, Rh or Ir may be used. For example, LiNiOx, IrO₂, NiO, V₂O₅, LixCoO₂, Rh₂O₃ or CrO₃, and the like may be used.

Without being particularly limited, the metal oxide layer may have a thickness in a range of 50 nm to 450 nm.

The method of forming the metal oxide layer is not particularly limited. For example, the layer can be formed using a variety of known deposition methods.

The metal oxynitride layer may comprise an oxynitride that simultaneously contains two or more metals.

In one example, the metal oxynitride layer may have an oxynitride containing two or more metals selected from Ti, Nb, Mo, Ta and W simultaneously.

More specifically, the metal oxynitride layer may comprise Mo and Ti simultaneously. In this connection, the nitride, oxide or oxynitride containing only Mo has poor adhesion with the adjacent thin film, and the nitride, oxide or oxynitride containing only Ti has poor durability, such as decomposition upon potential application. Particularly, since the nitride or oxynitride containing any one of the metals listed above, for example, Ti alone or Mo alone, has a low light transmission characteristic, such as visible light transmittance of 40% or less, 35% or less, or 30% or less, even in a state where no potential or the like is applied, it is not suitable for use as a member for an electrochromic film which requires transparency upon bleaching. In addition, when a material having a low transmittance as above is used, it is difficult for a user to view a clear optical characteristic change of coloring and bleaching required in an electrochromic device.

In one example, the metal oxynitride included in the metal oxynitride layer may be represented by Formula 1 below.

[Formula 1] MoₐTi_{b}OₓN_{y}

In Formula 1, a represents an elemental content ratio of Mo, b represents an elemental content ratio of Ti, x represents an elemental content ratio of O, and y represents an elemental content ratio of N, where a>0, b>0, x>0, y>0, 0.5<a/b<4.0, and 0.005<y/x<0.02. In the present application, the term "elemental content ratio" may be atomic % and may be measured by XPS (X-ray photoelectron spectroscopy). When the elemental content ratio (a/b) is satisfied, a metal oxynitride layer having excellent adhesion to other layer constitutions as well as durability can be provided. When the elemental content ratio (y/x) is satisfied, the metal oxynitride layer may have light transmittance of 60% or more. Particularly, when the elemental content ratio (y/x) is not satisfied, the oxynitride layer has a very low light transmission characteristic (transparency), such as light transmittance of 40% or less, or 35% or less, and thus the oxynitride layer cannot be used as a member for an electrochromic device.

In one example, the metal oxynitride layer may have a thin film density (p) of 15 g/cm³ or less. For example, the lower limit of the film density (p) value may be 0.5 g/cm³ or more, 0.7 g/cm³ or more, or 1 g/cm³ or more, and the upper limit of the film density (p) value may be 13 g/cm³ or less, or 10 g/cm³ or less. The thin film density may be measured by XRR (X-ray reflectivity).

In one example, the metal oxynitride layer may have a thickness of 150 nm or less. For example, the metal oxynitride layer may have a thickness of 140 nm or less, 130 nm or less, 120 nm or less, 110 nm or less, or 100 nm or less. When the upper limit of the thickness is exceeded, the insertion or desorption of electrolyte ions may be lowered, and the color-switching speed may be adversely affected. The lower limit of the thickness of the metal oxynitride layer is not particularly limited, but may be, for example, 10 nm or more, 20 nm or more, or 30 nm or more. When it is less than 10 nm, the thin film stability is poor.

In one example, the metal oxynitride layer may have a visible light refractive index in a range of 1.5 to 3.0 or in a range of 1.8 to 2.8. When the metal oxynitride layer has a visible light refractive index in the above range, an appropriate light transmission characteristic in the conductive laminate can be realized.

The method of forming the metal oxynitride layer is not particularly limited. For example, the layer can be formed using a variety of known deposition methods.

In the present application, monovalent cations may be present in at least one or more layers of the layer structures constituting the conductive laminate. For example, the monovalent cations may be present in any one layer of the metal oxynitride and the metal oxide layer, or the monovalent cations may be present in both the metal oxynitride layer and the metal oxide layer. In the present application, the presence of monovalent cations in any layer of the conductive laminate is used as a meaning embracing, for example, the case where monovalent cations are included (inserted) in each layer in the form of an ion such as Li⁺ and the case where the inserted monovalent cations are chemically bonded to the metal oxynitride or the metal oxide to be included in each layer. In the present application, the insertion of monovalent cations can be performed before manufacturing the electrochromic device (formed by laminating an electrolyte layer and the conductive laminate).

The monovalent cation may be a cation of an element different from the metal contained in the metal oxynitride layer or the metal oxide layer. Without being particularly limited, the monovalent cation may be, for example, H⁺, Li⁺, Na⁺, K⁺, Rb⁺ or Cs⁺. The monovalent cations can also be used as electrolyte ions capable of participating in an electrochromic reaction, for example, coloring or bleaching of a metal oxide layer, as described below. Thus, the presence of monovalent cations in the layer contributes to migration of monovalent cations between the electrolyte and each layer later required for a reversible electrochromic reaction, and makes it possible to omit an initialization operation, as described below.

In one example, when monovalent cations are present in the metal oxide layer, the monovalent cations may be present in a content range of 1.0×10⁻⁸ mol to 1.0×10⁻⁶ mol, more specifically, a content range of 5.0×10⁻⁸ mol to 1.0×10⁻⁷ mol, per cm² of the metal oxide layer. When the monovalent cations exist in the content range above, the above-described object can be achieved.

In another example, when monovalent cation are present in the metal oxynitride layer, the monovalent cations may be present in a content range of 5.0×10⁻⁹ mol to 5.0×10⁻⁷ mol, more specifically, a content range of 2.5×10⁻⁸ mol to 2.5×10⁻⁷ mol, per cm² of the metal oxynitride layer. When the monovalent cations exist in the content range above, the above-described object can be achieved.

In the present application, the content of monovalent cations present in each layer, that is, the mole number can be obtained from the relationship between the charge quantity in each layer in which monovalent cations exist and the mole number of electrons. For example, when monovalent cations are inserted into the conductive laminate of the constitutions above using a potentiostat device to be described below and the charge quantity of the metal oxynitride layer in the conductive laminate is A (C/cm²), the value (A/F) of the charge quantity A divided by the Faraday constant F may be a mole number of electrons present per cm² of the metal oxynitride layer. On the other hand, since the electrons (e⁻) and the monovalent cations can react at a ratio of 1:1, the maximum amount of monovalent cations present in each layer, that is, the maximum mole number may be equal to the mole number of electrons obtained from the above. Regarding the content of monovalent cations, the method of measuring the charge quantity is not particularly limited, and a known method can be used. For example, the charge quantity can be measured by potential step chronoamperometry (PSCA) using a potentiostat device.

In one example, the presence of monovalent cations in some layers of the layer structures constituting the conductive laminate, that is, the insertion of monovalent cations into some layers of the conductive laminate, can be achieved using a potentiostat device. Specifically, monovalent cations may be inserted into the conductive laminate by a method of providing a three-electrode potentiostat device composed of a working electrode, a reference electrode including Ag, and a counter electrode including a lithium foil or the like in an electrolytic solution containing monovalent cations, connecting the conductive laminate to the working electrode and then applying a predetermined voltage. The magnitude of the predetermined voltage applied for the insertion of monovalent cations may be determined in consideration of the degree of the content of monovalent cations included in an electrolyte to be described below, the degree of insertion of monovalent cations required in the conductive laminate, the optical characteristics of the required conductive laminate or the coloration level of the layer capable of electrochromism, and the like.

In the present application, the "coloration level" may mean "a minimum magnitude (absolute value)" of a voltage which can be applied to a layer capable of electrochromism to cause electrochromic (coloring and/or bleaching), such as the case that while an electrochemical reaction is induced by a voltage of a predetermined magnitude applied to a layer capable of electrochromism or a laminate comprising the same, so that the layer capable of electrochromism has a color, the transmittance of the layer or the laminate is lowered. For example, when a voltage has been applied to the conductive laminate in the order of -0.1V, - 0.5V, -IV, and -1.5V at a predetermined time interval and then the metal oxide layer has been colored after application of -1V, the coloration level of the metal oxide layer can be said to be 1V. Since the coloration level, that is, the minimum magnitude (absolute value) of the voltage causing the coloration functions as a kind of barrier against the coloration, when a potential smaller than the minimum magnitude (absolute value) of the coloration level of the relevant layer is applied, the coloring of the relevant layer does not actually occur (even if color-change finely occurs, it is difficult for an observer to view it).

In one example, the coloration levels of the metal oxynitride layer and the metal oxide layer may be different from each other. More specifically, the metal oxynitride layer can also be colored and bleached by the electrochemical reaction like the metal oxide layer, but the minimum magnitude (absolute value) of the voltage causing the coloration of the metal oxide layer and the minimum magnitude (absolute value) of the voltage causing the coloration of the metal oxynitride layer may be different from each other. To this end, as described above, the kind and/or content of the metal contained in the oxide and oxynitride of each layer can be appropriately controlled.

In one example, the coloration level of the metal oxynitride layer may have a value greater than the coloration level of the metal oxide layer. For example, when the coloration level of the metal oxide layer is 0.5V, the coloration level of the metal oxynitride layer may be 1V. Alternatively, when the coloration level of the metal oxide layer is IV, the coloration level of the metal oxynitride layer may be 2V or 3V. In one example, the coloration level of the metal oxide layer having the above configuration may be 1V.

In one example, only the metal oxide layer in the conductive laminate can be colored. More specifically, by appropriately adjusting the predetermined voltage magnitude to be applied at the time of inserting the monovalent cations as described above, it is possible that while the metal oxynitride layer having a higher coloration level than the metal oxide layer is not colored, only the metal oxide layer can be colored. For example, the colored metal oxide layer may have light transmittance of 45% or less, or 40% or less, and the non-colored metal oxynitride layer may maintain visible light transmittance of 60% or more, or 70% or more. In this case, the light transmittance of the conductive laminate comprising the colored metal oxide layer may be 45% or less, 40% or less, 35% or less, or 30% or less. The lower limit of the light transmittance of a conductive laminate comprising the colored metal oxide layer is not particularly limited, but may be, for example, 20% or more.

In one example, the oxynitride layer comprising an oxynitride of Formula 1 above may be colored under a voltage application condition of -2V or less, for example, -2.5V or less, or -3V or less. That is, the coloration level of the oxynitride layer may be 2V, 2.5V or 3V. For example, when voltages of -1.5V and - 2.0V are applied to a conductive laminate or a device comprising the same at a predetermined time interval, the oxynitride layer may be gradually colored from the point when the -2.0V is applied (the coloring can be viewed by the user). The oxynitride layer satisfying Formula 1 above may be colored with a color of (dark) gray or black series. The coloration level of the oxynitride layer may vary somewhat in the range of 2V or more, depending on the constitutions which are used together in the electrochromic film.

Without being particularly limited, the conductive layer may have a thickness of 50 nm to 400 nm or less. The conductive layer may comprise a transparent conductive compound, a metal mesh, or an OMO (oxide/metal/oxide), which may also be referred to as an electrode layer.

In one example, the transparent conductive compound used in the conductive layer may be exemplified by ITO (indium tin oxide), In₂O₃ (indium oxide), IGO (indium gallium oxide), FTO (fluorodo doped tin oxide), AZO (aluminum doped zinc oxide), GZO (gallium doped zinc oxide), ATO (antimony doped tin oxide), IZO (indium doped zinc oxide), NTO niobium doped titanium oxide), ZnO (zinc oxide) or CTO (cesium tungsten oxide), and the like. However, the material of the transparent conductive compound is not limited to the above-listed materials.

In one example, the metal mesh used for the conductive layer comprises Ag, Cu, Al, Mg, Au, Pt, W, Mo, Ti, Ni or an alloy thereof, which may have a lattice form. However, the material usable for the metal mesh is not limited to the above-listed metal materials.

In one example, the conductive layer may comprise an OMO (oxide/metal/oxide). Since the OMO has lower sheet resistance over the transparent conductive oxide typified by ITO, the improvement of the electrical characteristics of the conductive laminate, such as shortening the electrochromic speed of the electrochromic device, can be achieved.

The OMO may comprise an upper layer, a lower layer, and a metal layer provided between the two layers. In the present application, the upper layer may mean a layer located relatively farther from the metal oxynitride layer among the layers constituting the OMO.

In one example, the upper and lower layers of the OMO electrode may comprise an oxide of Sb, Ba, Ga, Ge, Hf, In, La, Se, Si, Ta, Se, Ti, V, Y, Zn, Zr or an alloy thereof. The types of the respective metal oxides included in the upper layer and the lower layer may be the same or different.

In one example, the upper layer may have a thickness in a range of 10 nm to 120 nm or in a range of 20 nm to 100 nm. In addition, the upper layer may have a visible light refractive index in a range of 1.0 to 3.0 or in a range of 1.2 to 2.8. Having the refractive index and thickness in the above ranges, appropriate levels of optical characteristics can be imparted to the conductive laminate.

In one example, the lower layer may have a thickness in a range of 10 nm to 100 nm or in a range of 20 nm to 80 nm. In addition, the lower layer may have a visible light refractive index in a range of 1.3 to 2.7 or in a range of 1.5 to 2.5. Having the refractive index and thickness in the above ranges, appropriate levels of optical characteristics can be imparted to the conductive laminate.

In one example, the metal layer included in the OMO electrode may comprise a low resistance metal material. Without being particularly limited, for example, one or more of Ag, Cu, Zn, Au, Pd and an alloy thereof may be included in the metal layer.

In one example, the metal layer may have a thickness in a range of 3 nm to 30 nm or in a range of 5 nm to 20 nm. In addition, the metal layer may have a visible light refractive index of 1 or less, or 0.5 or less. Having the refractive index and thickness in the above ranges, appropriate levels of optical characteristics can be imparted to the conductive laminate.

In another example of the present application, the present application relates to an electrochromic device. The electrochromic device may sequentially comprise the conductive laminate, the electrolyte layer and the counter electrode layer as described above. One side of the conductive laminate, the electrolyte layer and the counter electrode layer may directly contact with each other, or a separate layer or another structure may be interposed therebetween.

In one example, the electrochromic device may be configured such that the metal oxynitride layer in the structure of the conductive laminate is positioned closest to the electrolyte layer. More specifically, the electrochromic device may comprise a conductive layer, a metal oxide layer, a metal oxynitride layer, an electrolyte layer and a counter electrode layer sequentially.

As in the above-described one example of the present application, the conductive laminate comprises metal oxide and metal oxynitride layers capable of electrochromism. Then, the the metal oxide may comprise a reducing electrochromic material or an oxidizing electrochromic material. In one example, when the metal oxide layer comprises a reducing electrochromic material, two metal components contained in the metal oxynitride layer are selected from metals capable of being used in the metal oxynitride layer, and thus it is believed that the metal oxynitride layer and the metal oxide layer included in the conductive laminate have similar physical/chemical properties. Accordingly, when the electrolyte ions are inserted from the electrolyte layer into the conductive laminate, the electrolyte ions can be inserted into the metal oxide layer, which is an electrochromic layer, without disturbance by the metal oxynitride layer. The same applies to the case where the electrolyte ions are removed from each layer.

It is also determined that the metal oxynitride layer improves driving characteristics of the electrochromic device. Specifically, since there is a difference in reactivity or oxidation tendency between the metal components used in each layer, when the migration of the interlayer electrolyte ions is repeated, there may be a problem that the metal used in any layer, for example, the conductive layer or the metal layer is eluted. This problem is more clearly observed when the OMO is used. However, in the present application, since the metal oxynitride layer which can contain electrolyte ions functions as a kind of buffer or passivation layer, it is possible to prevent deterioration of the metal materials used for each layer such as a conductive layer or a metal layer. Consequently, the electrochromic device of the present application may have excellent durability and improved color-switching speed, and sufficiently improved usable level. Besides, as described below, due to the metal oxynitride layer having a coloration level different from that of the metal oxide layer, the present application can more finely adjust the optical characteristics of the electrochromic device.

The configuration of the counter electrode layer is not particularly limited. For example, it may have the same material and/or the same configuration as the conductive layer as described above.

The electrolyte layer may be a constitution providing electrolyte ions involved in the electrochromic reaction. The electrolyte ion may be a monovalent cation, for example, H⁺, Li⁺, Na⁺, K⁺, Rb⁺ or Cs⁺, which may be inserted into the conductive laminate to participate in the electrochromic reaction.

The type of the electrolyte included in the electrolyte layer is not particularly limited. For example, a liquid electrolyte, a gel polymer electrolyte or an inorganic solid electrolyte may be used without limitation.

The specific composition of the electrolyte used in the electrolyte layer is not particularly limited as long as it can contain a compound capable of providing the monovalent cation, that is, H⁺, Li⁺, Na⁺, K⁺, Rb⁺ or Cs⁺. For example, the electrolyte layer may comprise a lithium salt compound such as LiClO₄, LiBF₄, LiAsF₆ or LiPF₆, or a sodium salt compound such as NaClO₄.

In another example, the electrolyte may further comprise a carbonate compound as a solvent. Since the carbonate-based compound has a high dielectric constant, ion conductivity can be increased. As a non-limiting example, a solvent, such as PC (propylene carbonate), EC (ethylene carbonate), DMC (dimethyl carbonate), DEC (diethyl carbonate) or EMC (ethylmethyl carbonate), may be used as the carbonate-based compound.

In another example, when the electrolyte layer comprises a gel polymer electrolyte, a polymer such as, for example, polyvinylidene fluoride (PVdF), polyacrylonitrile (PAN), polymethylmethacrylate (PMMA), polyvinyl chloride (PVC), polyethylene oxide (PEO), polypropylene oxide (PPO), poly(vinylidene fluoride-hexafluoropropylene) (PVdF-HFP), polyvinyl acetate (PVAc), polyoxyethylene (POE) and polyamideimide (PAI) may be used.

The light transmittance of the electrolyte layer may be in a range of 60% to 95% and the thickness may be in a range of 10 µm to 200 µm, without being particularly limited.

In one example, the electrochromic device of the present application may further comprise an ion storage layer. The ion storage layer may mean a layer formed to match charge balance with the metal oxide layer and/or the metal oxynitride layer upon a reversible oxidation-reduction reaction for electrochromic of the electrochromic material. The ion storage layer may be positioned between the electrode layer and the electrolyte layer.

The ion storage layer may comprise an electrochromic material having a coloring property different from that of the electrochromic material used in the metal oxide layer. For example, when the metal oxide layer comprises a reducing electrochromic material, the ion storage layer may comprise an oxidizing electrochromic material. Also, the opposite is possible.

In one example, the ion storage layer may comprise an oxidizing electrochromic material. Specifically, one or more selected from an oxide of Cr, Mn, Fe, Co, Ni, Rh or Ir; a hydroxide of Cr, Mn, Fe, Co, Ni, Rh or Ir; and prussian blue may be included in the ion storage layer.

Without being particularly limited, the thickness of the ion storage layer may be in a range of 50 nm to 450 nm, and the light transmittance may be in a range of 60% to 95%.

When the electrochromic device comprises two electrochromic materials having different coloring characteristics in separate layers, the respective layers comprising the electrochromic materials must have the same coloring or bleaching state with each other. For example, when the metal oxide layer comprising a reducing electrochromic material is colored, the ion storage layer comprising an oxidizing electrochromic material must also have a colored state, and on the contrary, when the metal oxide layer comprising a reducing electrochromic material is bleached, the ion storage layer comprising an oxidizing electrochromic material must also be in a bleached state. However, as described above, since the two electrochromic materials having different coloring properties do not contain electrolytic ions per se, an operation of matching the colored or bleached state between the layers comprising the respective electrochromic materials is further required. Generally, this operation is called an initialization operation. For example, in the case where transparent WO₃, which is colored by reduction but is colorless in itself, is contained in the first layer and Prussian blue colored per se is contained in the second layer (counter layer), the bleaching treatment (reduction treatment) on Prussian blue was conventionally performed by applying a high voltage to the second layer of the electrochromic device which was constituted by laminating the electrode layer, the first layer, the electrolyte layer, the second layer and the electrode layer. However, the initialization operation done at a high potential has a problem of lowering the durability of the device such as causing side reactions in the electrode and the electrolyte layer. On the other hand, in the present application, monovalent cations usable as electrolyte ions may be inserted in advance into the conductive laminate before laminating the respective layer structures for element formation and the metal oxide layer and/or the metal oxynitride layer may also be optionally colored, so that the initialization operation as above is not necessary. Therefore, the device can be driven without lowering the durability due to the initialization operation.

In one example, the electrochromic device may further comprise a base material. The base material may be located on a lateral surface of the device, specifically on a lateral surface of the counter electrode layer or the conductive layer of the conductive laminate.

The base material may also have a light transmission characteristic, that is, light transmittance in a range of 60% to 95%. If the transmittance in the above range is satisfied, the type of the base material to be used is not particularly limited. For example, glass or a polymer resin may be used. More specifically, a polyester film such as PC (polycarbonate), PEN (poly(ethylene naphthalate)) or PET (poly(ethylene terephthalate)), an acrylic film such as PMMA (poly(methyl methacrylate)), or a polyolefin film such as PE (polyethylene) or PP (polypropylene), and the like may be used, without being limited thereto.

The electrochromic device may further comprise a power source. The method of electrically connecting the power source to the device is not particularly limited, which may be suitably performed by those skilled in the art. The voltage applied by the power source may be a constant voltage.

In one example, the power source may alternately apply a voltage at a level capable of bleaching and coloring the electrochromic material for a predetermined time interval.

In another example, the power source may change the magnitude of the voltage applied at predetermined time intervals. Specifically, the power source may apply a plurality of coloring voltages sequentially increasing or decreasing at predetermined time intervals, and apply a plurality of bleaching voltages sequentially increasing or decreasing at a predetermined time interval.

In another example, when the coloration level of the metal oxynitride layer is larger than the coloration level of the metal oxide layer, the power source can sequentially apply the coloration level of the metal oxide layer and the coloration level of the metal oxynitride layer. In this case, the metal oxide layer is first colored, and then the metal oxynitride layer is further colored. Accordingly, the electrochromic device of the present application can achieve light transmittance in a very low level, for example, light transmittance of 10% or less or 5% or less in a colored state up to the metal oxynitride layer. That is, for example, if the light transmittance of at least 20% or 15% or so could be realized in the case where only the metal oxide layer and/or the ion storage layer are colored, visible light transmittance of 10% or less, or 5% or less can be realized in the device of the present application colored stepwise up to the metal oxynitride layer. The light transmittance of the above level is a value that is difficult to realize realistically in the prior art using only the configuration corresponding to the metal oxide layer and the ion storage layer. Furthermore, in the prior art using only the configuration corresponding to the metal oxide layer and the ion storage layer, it cannot be expected to finely adjust the light transmittance stepwise as in the present application. In addition, in the present application, even if a voltage higher than the coloration level of the metal oxide layer is applied for finely controlling the light transmittance as above, the metal oxynitride layer functions as a kind of passivation layer, so that deterioration of the metal oxide layer can be prevented.

### Advantageous Effects

According to one example of the present application, a conductive laminate capable of electrochromism is provided. The conductive laminate and the electrochromic device comprising the same have improved electrochromism rate as well as excellent durability. In addition, when a laminate or element according to the present application is used, the optical properties can be adjusted stepwise and finely.

### Brief Description of Drawings

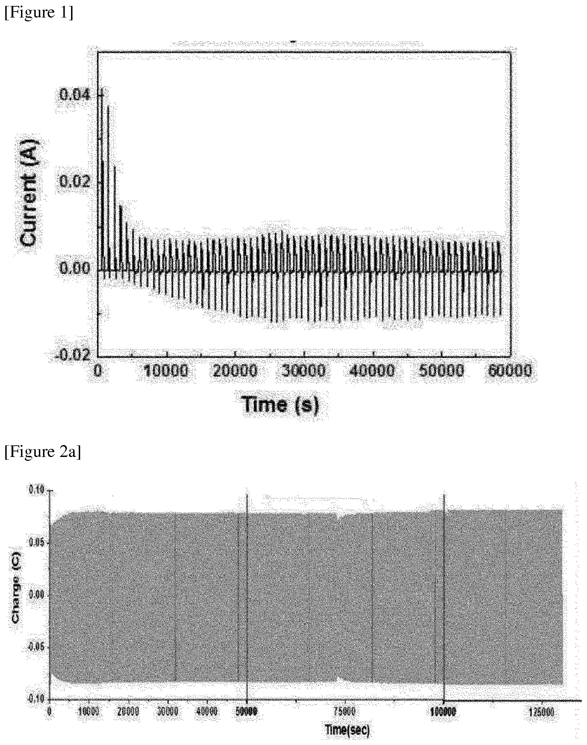

Figure 1 is a graph showing an appearance in which a laminate having a light transmission characteristic and comprising a metal oxynitride layer of the present application is driven without lowering durability when a voltage of ±5V is applied.

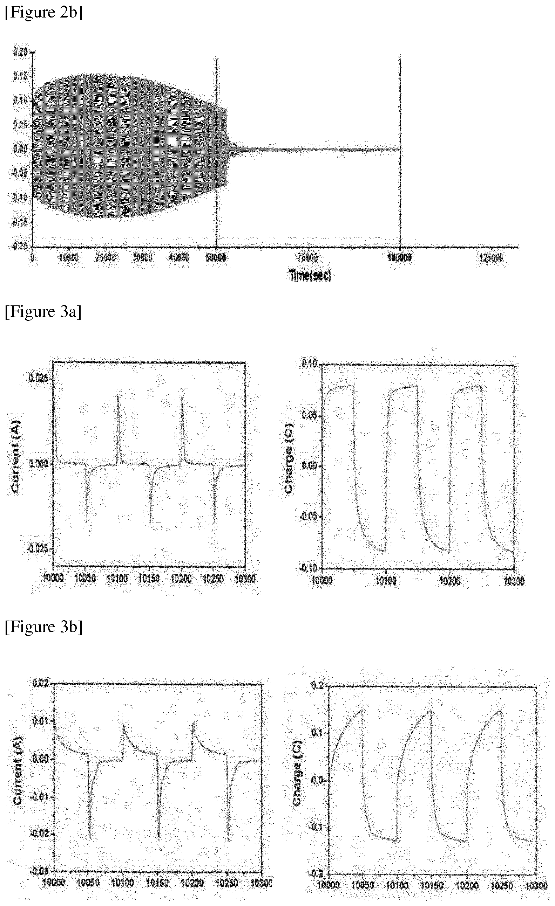

Figure 2 is a graph relating to driving characteristics of a device. Specifically, Figure 2(a) is a graph showing an appearance in which the charge quantity of the device of Example 1 changes with increasing cycles, and Figure 2(b) is a graph showing an appearance in which the charge quantity of the device of Comparative Example 1 changes with increasing cycles.
Figure 3 is a graph relating to driving characteristics of a device. Specifically, Figure 3(a) is a graph enlarging and showing changes of electric currents and charge quantities measured according to Example 2 in a specific cycle section (second unit time), and Figure 3(b) is a graph enlarging and showing changes of electric currents and charge quantities measured according to Comparative Example 2 in a specific cycle section.

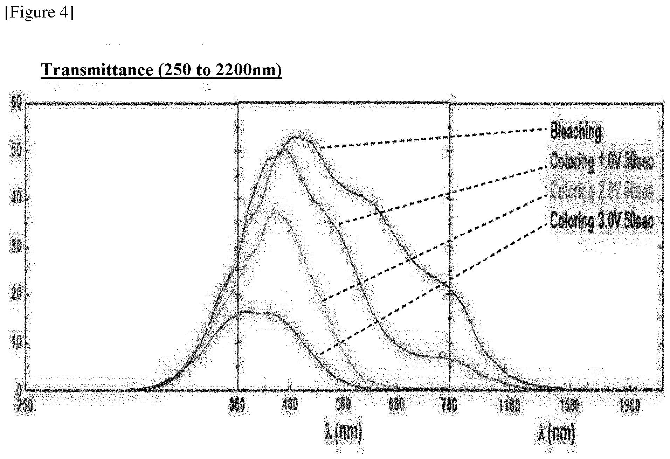

Figure 4 is a graph showing optical characteristics of the electrochromic device of the present application in which the transmittance can be adjusted stepwise according to the applied voltage.

### Best Mode

Hereinafter, the present application will be described in detail through Examples. However, the scope of protection of the present application is not limited by Examples to be described below.

### Experimental Example 1: Confirmation of light transmission characteristic of metal oxynitride layer

### Production Example 1

**Production of laminate:** ITO having light transmittance of about 90% was formed on one side of glass having light transmittance of about 98%. Thereafter, a layer of an oxynitride (MoₐTi_{b}OₓN_{y}) containing Mo and Ti was formed to a thickness of 30 nm on the ITO surface (opposite to the glass position) using sputtering deposition. Specifically, the deposition was performed at a weight % ratio of Mo and Ti targets of 1:1, a deposition power of 100 W and a process pressure of 15 mTorr, and flow rates of Ar, N₂ and O₂ were 30 sccm, 5 sccm and 5 sccm, respectively.

**Measurement of physical properties:** The content ratio of each element in the oxynitride layer and the transmittance of the laminate were measured and described in Table 1. The elemental content (atomic %) was measured by XPS (X-ray photoelectron spectroscopy) and the transmittance was measured using a haze meter (solidspec 3700).

### Production Example 2

An oxynitride layer was formed in the same manner as in Production Example 1, except that the flow rate of nitrogen was 10 sccm at the time of deposition and the content ratios were changed as in Table 1.

### Production Example 3

An oxynitride layer was formed in the same manner as in Production Example 1, except that the flow rate of nitrogen was 15 sccm at the time of deposition and the content ratios were changed as in Table 1.

### Production Example 4

An oxide layer was formed in the same manner as in Production Example 1, except that the flow rate of nitrogen was 0 sccm at the time of deposition and the content ratios were changed as in Table 1.

**[Table 1]**

| | N | Ti | O | Mo | a/b | y/x | Transmittance (%) |
|---|---|---|---|---|---|---|---|
| Production Example 1 | 0.6±0.0 | 13.1±0.2 | 57.3±0.3 | 29.5±0.5 | 2.251908 | 0.0105 | 80 |
| Production Example 2 | 2.7±0.6 | 14.4±0.3 | 44.8±0.9 | 33.0±0.5 | 2.291667 | 0.0603 | 11 |
| Production Example 3 | 3.3±0.4 | 15.5±0.2 | 33.5±0.3 | 33.5±0.4 | 2.16129 | 0.0985 | 5 |
| Production Example 4 | not detected | 15.5±0.2 | 51.6±0.4 | 32.9±0.3 | 2.12 | - | 15 |

From Table 1, it can be deduced that the oxynitride layers of Production Examples 2 to 4 have a very low transmittance, but the oxynitride layer containing an oxynitride of Production Example 1 has transmittance of about 90%. The oxynitride layer of Production Example 1 having a high light transmission characteristic is suitable as a member for an electrochromic device.

### Experimental Example 2: Confirmation of electrochromic characteristics of metal oxynitride layer

The glass/ITO/oxynitride (MoₐTi_{b}OₓN_{y})) laminate (half-cell) produced from Production Example 1 was immersed in an electrolytic solution containing LiClO₄ (1M) and propylene carbonate (PC) and a coloring voltage of -3V and a bleaching voltage of +3V were alternately applied at 25°C for 50 seconds, respectively. The currents, transmittances and color-change times thus measured upon coloring and bleaching are as described in Table 2.

The measurement as above was also performed for ±4V and ±5V, and the results were described in Table 2.

**[Table 2]**

| Driving Potential | Charge Quantity (mC/cm²) | Colored | | | Bleached | | | ΔT |
|---|---|---|---|---|---|---|---|---|
| | | Peak Current (mA) | T (%) | Elapsed Time (s) | Peak Current | T (%) | Elapsed Time (s) | |
| ±5V | 60 | 107 | 30 | 25 | 118 | 61 | 13 | 31 |
| ±4V | 50 | 88 | 38 | 22 | 92 | 60 | 13 | 22 |
| ±3V | 40 | 68 | 45 | 19 | 88 | 60 | 12 | 15 |
| * Size of laminate (width × length): 2.5 cm×10 cm | | | | | | | | |
| * Glass sheet surface: 10Ω/□ | | | | | | | | |
| * Charge quantity: measured by potential step chronoamperometry (PSCA) using a potentiostat device. | | | | | | | | |
| * Colored elapsed time (s): the time taken to reach the 80% level of the final coloring state transmittance observed after the elapse (50s) of the application time of the potential for coloring | | | | | | | | |
| * Bleached elapsed time (s): the time taken to reach the 80% level of the final bleaching state transmittance observed after the elapse (50s) of the application time of the potential for bleaching | | | | | | | | |
| * Driving potential: a voltage of a predetermined magnitude actually applied for coloring and bleaching of the laminate (half cell). The bleaching potential and the coloring potential are the same in magnitude but different in sign. | | | | | | | | |

As in Table 2, it can be confirmed that the laminate of Production Example 1 has electrochromic characteristics (coloring) depending on the applied voltage. On the other hand, Figure 1 is a graph recording an appearance in which the laminate of Production Example 1 is driven (electrochromic) when the driving potential is ±5V.

### Experimental Example 3: Comparison of the driving time (cycling) and the usable level of the conductive laminate and the electrochromic device comprising the same

### Example 1

A conductive laminate comprising a MoₐTi_{b}OₓN_{y} layer having the same elemental content ratio as the oxynitride of Production Example 1, a WO₃ layer, and an OMO electrode layer sequentially, was produced. 100 ppm of an electrolytic solution containing LiClO₄ (1M) and propylene carbonate (PC) and a potentiostat device were prepared and a voltage of -1V was applied for 50 seconds to insert Li⁺ into the MoₐTi_{b}OₓN_{y} layer and the WO₃ layer. It was confirmed that the WO₃ layer was colored in a color of blue series. At this time, it was confirmed that the content of Li⁺ present per cm² of the WO₃ layer was included in the range of 1.0×10⁻⁸ mol to 1.0×10⁻⁶ mol, and the content of Li⁺ present per cm² of the MoₐTi_{b}OₓN_{y} layer was included in the range of 5.0×10⁻⁹ mol to 5.0×10⁻⁷ mol.

Thereafter, a laminate of Prussian blue (PB) and ITO was bonded to the conductive laminate together via a GPE (gel polymer electrolyte) in the form of a film. The produced electrochromic device has a laminate structure of OMO/WO₃/MoₐTi_{b}OₓN_{y}/GPE/PB/ITO.

While a bleaching voltage and a coloring voltage were repeatedly applied to the produced device at a constant cycle, the change in charge quantity of the device with time was observed. The bleaching voltage per cycle was applied at (+) 1.0V for 50 seconds and the coloring voltage was selected in the range of (-) 1.0 to (-) 3.0V and applied for 50 seconds. The results are as shown in Figure 2(a).

### Comparative Example 1

An electrochromic device was equally produced, except that the MoₐTi_{b}OₓN_{y} layer was not included, and the change in charge quantity of the device was observed in the same manner. The results are as shown in Figure 2(b).

From Figure 2(b), it can be confirmed that in the case of the device of Comparative Example, the driving of about 500 cycles is the limit. However, as in Figure 2(a), it can be confirmed that in the device of Example, no degradation in performance is observed even if it is driven for 2.5 times or more relative to Comparative Example. It is determined that as the MoₐTi_{b}OₓN_{y} layer of the device of Example prevents deterioration of the adjacent OMO or WO₃, this is a result in which the durability of the device is improved.

On the other hand, with respect to the electrochromic device, the level at which cycling can be performed in a state where no damage occurs to the device upon driving the device is driven is referred to as a usable level of the device. Unlike Comparative Example, the charge quantity does not decrease in Example comprising the MoₐTi_{b}OₓN_{y} layer even if 1,000 cycling or more is performed, and thus it can be said that the usable level has been improved as compared to Comparative Example.

### Experimental Example 4: Comparison of electrochromic time of the conductive laminate and the electrochromic device comprising the same

### Example 2

Using a Solidspec 3700 instrument, the charge quantity and current of the device were measured at the time when the coloring and bleaching change was made to some extent during the experiment performed in Example 1. The results are as shown in Figure 3(a). In the graph of Figure 3(a), the X axis means time.

### Comparative Example 2

For the device of Comparative Example 1, the charge quantity and current of the device were measured in the same manner as in Example 2. The results are as shown in Figure 3(b).

Unlike Figure 3(b), it can be confirmed that Figure 3(a) shows steep peaks of the charge quantity and the current. Specifically, Figure 3(b) shows the time required for the charge quantity and the current to converge to a specific value in a range of approximately 20 seconds to 30 seconds, but Figure 3(a) shows the time within 10 seconds. This means that the color-switching speed in the device of Example is fast as compared to the device of Comparative Example.

### Experimental Example 4: Confirmation of function to finely control transmittance in the conductive laminate and the electrochromic device comprising the same

### Example 3

For the device of Example 1, -IV, -2V, and -3V were applied stepwise as the coloration level, and 0.5V was applied as a bleaching potential. The transmittance and color at each voltage measured using a Solidspec 3700 instrument are as shown in Table 3 and Figure 4 below.

**[Table 3]**

| State | Applied Voltage (V) | Transmittance (%) | Color |
|---|---|---|---|
| Bleaching | 0.5 | 45.74 | 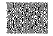 |
| | | | (pastel) |
| Coloring | -1 | 23.12 | 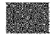 |
| | | | (blue) |
| | -2 | 6.23 | 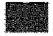 |
| | | | (dark blue) |
| | -3 | 3.41 | 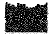 |
| | | | (greenish blue) |

From Table 3 and Figure 4, it can be confirmed that the laminate and the electrochromic device of the present application comprising two layers having different coloration levels have light transmittance capable of being adjusted stepwise, and in particular, when both the oxynitride layer and the oxide layer upon coloring are colored, they have a very high light blocking property. Specifically, it can be confirmed that while the metal oxide layer comprising WO₃ is colored to light blue from the time of -1V application and the metal oxynitride layer comprising Mo and Ti is colored to dark gray after the time of -2V application, very low light transmittance is observed.

## Claims

1. A conductive laminate comprising a metal oxynitride layer, a metal oxide layer and a conductive layer,
wherein monovalent cations exist in the metal oxynitride layer or the metal oxide layer.

2. The conductive laminate according to claim 1, wherein monovalent cations exist in the metal oxynitride layer and the metal oxide layer.

3. The conductive laminate according to claim 1 or 2, wherein 5.0×10⁻⁹ mol to 5.0×10⁻⁷ mol of monovalent cations are present per cm² of the metal oxynitride layer and 1.0×10⁻⁸ mol to 1.0×10⁻⁶ mol of monovalent cations are present per cm² of the metal oxide layer.

4. The conductive laminate according to claim 1, wherein the monovalent cation is H⁺, Li⁺, Na⁺, K⁺, Rb⁺ or Cs⁺.

5. The conductive laminate according to claim 1, wherein the conductive laminate has visible light transmittance of 45% or less.

6. The conductive laminate according to claim 1, wherein the metal oxide layer comprises a reducing electrochromic material or an oxidizing electrochromic material.

7. The conductive laminate according to claim 6, wherein the reducing electrochromic material comprises an oxide of Ti, Nb, Mo, Ta or W.

8. The conductive laminate according to claim 7, wherein the metal oxynitride layer has an oxynitride comprising two or more metals selected from Ti, Nb, Mo, Ta and W.

9. The conductive laminate according to claim 8, wherein the metal oxynitride layer comprises Mo and Ti.

10. The conductive laminate according to claim 9, wherein the metal oxynitride layer is represented by Formula 1 below:
[Formula 1] MoₐTi_{b}OₓN_{y}
(wherein, a represents an elemental content ratio of Mo, b represents an elemental content ratio of Ti, x represents an elemental content ratio of O, and y represents an elemental content ratio of N, where a>0, b>0, x>0, y>0, 0.5<a/b<4.0, and 0.005<y/x<0.02).

11. The conductive laminate according to claim 1, wherein the metal oxynitride layer has a thickness of 150 nm or less.

12. The conductive laminate according to claim 1, wherein the conductive layer comprises a transparent conductive compound, a metal mesh, or an OMO (oxide/metal/oxide).

13. The conductive laminate according to claim 12, wherein the OMO (oxide/metal/oxide) comprises an upper layer and a lower layer, and the upper layer and the lower layer comprise an oxide of Sb, Ba, Ga, Ge, Hf, In, La, Se, Si, Ta, Se, Ti, V, Y, Zn, Zr or an alloy thereof.

14. The conductive laminate according to claim 13, wherein the upper layer has a thickness in a range of 10 nm to 120 nm and a visible light refractive index in a range of 1.0 to 3.0, and the lower layer has a thickness in a range of 10 nm to 100 nm and a visible light refractive index in a range of 1.3 to 2.7.

15. The conductive laminate according to claim 13, wherein the OMO (oxide/metal/oxide) comprises a metal layer between the upper layer and the lower layer, and the metal layer comprises Ag, Cu, Zn, Au, Pd or an alloy thereof.

16. The conductive laminate according to claim 15, wherein the metal layer has a thickness in a range of 3 nm to 30 nm and a visible light refractive index of 1 or less.

17. An electrochromic device comprising the conductive laminate according to claim 1, an electrolyte layer; and a counter electrode layer sequentially.

18. The electrochromic device according to claim 17, wherein the electrolyte layer comprises a compound providing H⁺, Li⁺, Na⁺, K⁺, Rb⁺ or Cs⁺.

19. The electrochromic device according to claim 17, further comprising an ion storage layer between the counter electrode layer and the electrolyte layer.

20. The electrochromic device according to claim 19, wherein the ion storage layer comprises a electrochromic material having a coloring property different from that of the electrochromic material contained in the metal oxide layer.
